# EUROPÄISCHE PATENTANMELDUNG

(11) **EP 1 327 866 A2**
(43) Veröffentlichungstag der Anmeldung: **16.07.2003**
(21) Anmeldenummer: 03000179.6
(22) Anmeldetag: 07.01.2003
(51) Int. Cl.: G01F 23/72, G01F 23/68

(54) **Flexibles Kontakelement zur berührungslosen Pegelsignalerfassung**

(30) Priorität: 11.01.2002 DE 10200867
(71) Anmelder: ROBERT BOSCH GMBH, 70442 Stuttgart (DE)
(72) Erfinder: Kramp, Wolfgang, 71254 Ditzingen (DE)

(57) **Zusammenfassung**

Die Erfindung bezieht sich auf eine Vorrichtung zur Erfassung des Füllstandes (23) einer Flüssigkeit innerhalb eines Behälters (21), in welchem ein elektrisches Kontaktelement (1) angeordnet ist, in dessen Endbereich (7) Anschlüsse (8, 9) vorgesehen sind, an denen ein elektrisches Signal abgegriffen werden kann. Innerhalb des Behälters (21) ist ein flexibles Kontaktelement (1) angeordnet, an dessen Innenseite (3) in einem Hohlraum (2) zuweisend elektrisch leitende Schichten (12, 13, 14) angeordnet sind, die über ein an der Außenseite (5) angeordnetes, relativ zum flexiblen Kontaktelement (1) bewegbares Erfassungselement (4) miteinander kontaktierbar sind.

## Beschreibung

### Technisches Gebiet

Die Füllstandserfassung von Fluiden, wie z. B. Kraftstoff im Tank eines Kraftfahrzeuges erfolgt weitestgehend noch über mechanische Systeme. Angesichts des zunehmenden Einsatz berührungsloser Signalerfassungssysteme erscheint ein Ersatz mechanischer Füllstands-erfassungssysteme durch eine berührungslose, kontaktlose Signalerfassung wünschenswert.

### Stand der Technik

Bei heutigen Einrichtungen zur Erfassung des Füllstandes werden in der Regel mechanische Erfassungssysteme eingesetzt, die mit einem Potentiometer zusammenwirken. Das Potentiometer wird in solchen Fällen ungeschützt im Bodenbereich eines eine Flüssigkeit aufnehmenden Behälters angeordnet. Im Bodenbereich eines Behälters sammeln sich jedoch auch die in der Flüssigkeit enthaltenen Schmierstoffe und Partikel an, denen das Potentiometer ausgesetzt ist. Am Potentiometer können sich somit Partikel anlagern, es ist Korrosionseinflüssen ausgesetzt und kann Abrieb unterliegen.

In Kraftstofftanks von Kraftfahrzeugen werden aufgrund der Fahrdynamik des Kraftfahrzeuges im Bodenbereich des Tanks abgelagerte Partikel verwirbelt, jedoch können beim Tanken, je nach Reinheit des Kraftstoffes, stetig neue Partikel bzw. Schwebepartikel und Abrieb in das Innere des Tanks gespült werden, die die Funktion des Potentiometers beeinträchtigen können, insbesondere die Genauigkeit des Kontaktes eines Schleifers mit einer Wicklung, die am Potentiometer in der Regel ausgebildet ist.

Bei stationär angeordneten Behältern entfällt die Verwirbelung von abgelagerten Partikeln aufgrund der fehlenden Fahrdynamik, wie sie bei Kraftfahrzeugen auftritt, so dass sich im Bodenbereich rasch Verunreinigungen ansammeln können, die korrosiv auf das Potentiometer einwirken.

### Darstellung der Erfindung

Mit der erfindungsgemäß vorgeschlagenen Lösung wird die Robustheit einer kontaktlosen Erfassung bei gleichem Aufwand hinsichtlich der Signalerfassung erheblich erhöht. Da das Prinzip der Signalerfassung das gleiche bleibt, bedarf die Anbindung der erfindungsgemäß vorgeschlagenen Einrichtung keiner wesentlichen Modifikation der nachgeordneten Auswertung. Zusätzlicher Aufwand, der etwa beim Einsatz eines Hall-Sensors durch eine zusätzliche Elektronik anfiele oder bei Einsatz einer opto-elektronischen Auswertung erforderlich wäre, kann mithin entfallen. Ferner ist der Aufwand hinsichtlich der Sauberkeit der Peripherie bei Einsatz eines flexiblen Kontaktelementes gemäß der vorgeschlagenen Lösung wesentlich geringer, was für den Einsatz eines solchen Kontaktelementes auch in schmutz- und partikelbeladener Umgebung günstig ist.

Die bei einer Tankstandsgebererfassung - um ein Beispiel zu nennen - eingesetzte Kinematik kann weitestgehend erhalten bleiben und bedarf keiner wesentlichen Modifikation. Es wird ein flexibles Kontaktelement eingesetzt, welches stabförmig ausgebildet ist und an die Stelle eines mit einem Potentiometer zusammenwirkenden Schleifers tritt. An einem Ende des stabförmigen, flexibel ausgebildeten Kontaktelementes ist ein relativ zum stabförmigen Kontaktelement bewegbarer Magnetkopf angeordnet. Schwimmer und Hebel bekannter Erfassungskinematiken können weitestgehend übernommen werden. Die Bewegung wird lediglich auf einen Magneten, der als Erfassungselement eingesetzt werden kann bzw. auf einen Druckstift, übertragen. Je nach Verfahren kann die Bewegung magnetisch oder über einen auf eine Wiederstandsbahn einwirkenden Druckstift übertragen werden.

Eine besonders einfache und elegante Ausführung besteht darin, das flexible Kontaktelement innerhalb einer Röhre, die in einem Behälter aufgenommen sein kann oder in diesen hineinragend angeordnet ist, in vertikaler Lage anzuordnen. Ein mit einem Schwimmer versehener Magnetkörper bewegt sich relativ zum flexiblen Kontaktelement entsprechend des Flüssigkeitsstandes in der Röhre. Eine an der Wandung des flexiblen Kontaktelementes angeordnete Schicht aus einem ferromagnetischen Material wird durch den Magneten mit einer dem ferromagnetischen Material gegenüberliegend an der Innenwandung des flexiblen Kontaktelementes angeordneten resistiven Schicht in Kontakt gebracht, wodurch ein Kurzschluss der resistiven Schicht und der ferromagnetischen Schicht entsteht. Das auf diese Weise erzeugte elektrische Signal kann z. B. an den Enden des flexiblen Kontaktelementes abgegriffen werden. Das elektrische Signal entspricht dem Pegel des Flüssigkeitsstandes, wie z. B. dem Kraftstoffstand innerhalb eines Tanks eines Kraftfahrzeuges.

Bei Anwendung .der Füllstandserkennung gemäß der vorgeschlagenen Lösung in stationär angeordneten Behältern sowie in bewegten Behältern, z. B. Tanks, Bremsflüssigkeitsbehältern, Scheibenreinigungsflüssigkeit- oder Hydraulikbehältern können anstelle von Schwimmern auch andere Kinematiken zum Einsatz kommen, mit denen der den Schleifer ersetzende Magnet bzw. Permanentmagnet relativ zum die korrespondierende Schleiferbahn ersetzenden flexiblen Kontaktelement - z. B. eines eine resistive und eine ferromagnetische Schicht enthaltenden Gummischlauches - bewegt werden kann. Eine Anordnung des Permanentmagneten an einem angelenkten Stab, einer Gelenkstange oder dergleichen ist ebenfalls möglich. Mit der Anordnung eines Magneten an einer solchen Kinematik, lässt sich ebenfalls eine Relativbewegung zwischen Magnet und flexiblem Kontaktelement herbeiführen.

Die Schwimmerbewegung kann bei horizontal angeordneten flexiblen Kontaktelementen über Zwischenschaltung eines beispielsweise rechtwinklig ausgebildeten Hebelarmes über einen Drehpunkt in eine Radialbewegung umgelenkt werden. Damit bewegt sich das Stabende, welches einen magnetischen Erfassungskopf aufweist, radial entlang des Kontaktschlauches. Die Wegstrecke dieser Bewegung wird durch die Länge des Stabes bis zum Drehpunkt definiert. Neben einer radialen Schlauchführung kann auch eine horizontale Schlauchführung gewählt werden, wobei sich lediglich ein Unterschied hinsichtlich des Verhältnisses der Wegstrecken ergibt.

### Zeichnung

Anhand der Zeichnung wird die Erfindung nachfolgend eingehender beschrieben.

Es zeigt:
- Figur 1: ein stabförmiges Kontaktelement mit einen in dessen Endbereich aufgenommenen bewegbaren Permanentmagneten,
- Figur 2: eine vergrößerte Schnittdarstellung des Endbereiches des stabförmigen Kontaktelementes mit Wiedergabe des Schichtaufbaus innerhalb des Kontaktelementes und
- Figur 3: die Anordnung eines flexiblen Kontaktelementes in einer vertikalen Einbauanordnung innerhalb eines Tanks eines Kraftfahrzeuges.
- Figur 4: zeigt die Draufsicht auf ein Schwimmerelement mit darin aufgenommenem Erfassungselement und
- Figur 5: die Ausführungsvariante einer berührungslosen Tankstandserfassung mittels eines angelenkten Hebels.

### Ausführungsvarianten

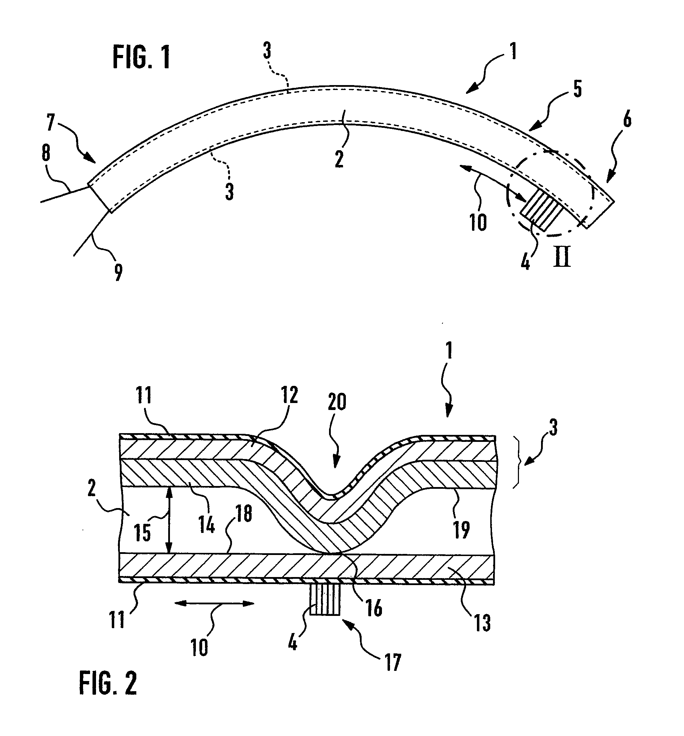

Figur 1 zeigt die Wiedergabe eines stabförmig konfigurierten Kontaktelementes mit in dessen Endbereich aufgenommenem, relativ zum Kontaktelement bewegbaren Magneten bzw. Permanentmagneten.

Der Darstellung gemäß Figur 1 ist ein flexibles, gebogen dargestelltes Kontaktelement 1 entnehmbar. Das stabförmig konfigurierte Kontaktelement 1 - etwa in Form eines Schlauches - umfasst einen Hohlraum 2, der von einer Wandung 3 begrenzt ist. An einer Außenseite des Elementes ist eine Signalerfassungseinheit 4 angeordnet, die entlang des Behälters bewegbar ist.

In einem ersten Endbereich 6 des flexiblen, stabförmig konfigurierten Kontaktelementes 1 ist dessen Hohlraum 2 durch einen Bodenabschnitt abgeschlossen, während an einem zweiten Endbereich 7 das flexible Kontaktelement 1 offen ist. Am zweiten Endbereich 7 sind in der Darstellung gemäß Figur 1 Kabelenden 8 bzw. 9 dargestellt, über welche das flexible, ein elektrisches, der Füllstandshöhe der zu detektierenden Flüssigkeit entsprechendes Signal generiert werden kann und über die das Signal an eine hier nicht dargestellte Anzeige bzw. Auswertevorrichtung übertragen werden kann. In die Wand 3 des beispielsweise schlauchartig konfigurierten Kontaktelementes sind Schichten eingebettet, die ein elektrisches Signal, welches am ersten Kabelende 8 bzw. am zweiten Kabelende 9 abgegriffen werden kann, entsprechend der Stellung des Erfassungselementes 4 generieren.

Figur 2 ist eine vergrößerte Schnittdarstellung eines Bereiches des stabförmigen, flexibel ausgebildeten Kontaktelementes mit Wiedergabe des Schichtaufbaus der Wand des Kontaktelements zu entnehmen.

Figur 2 zeigt in vergrößerter Darstellung eine Verformung 20 des flexiblen, verformbar ausgebildeten Kontaktelementes 1. Die Verformung 20 in einer Außenwandung 11 des schlauchförmig konfigurierten Kontaktelementes 1 wird durch einen relativ zur Außenseite 5 des flexiblen Kontaktelementes bewegbaren Magnetkopf 4 verursacht. Das Erfassungselement 4 kann sowohl als ein Magnet als auch ein Permanentmagnet ausgebildet sein und nimmt in der Darstellung gemäß Figur 2 eine mit Bezugszeichen 17 gekennzeichnete Position ein.

Die Wand 3 des verformbaren Kontaktelementes 1 umfasst an einer Seite eine erste resistive Schicht 12. Die erste resistive Schicht 12 ist in nach außen hin durch die Schlauchwand 11 des flexiblen, verformbaren Kontaktelementes 1 begrenzt. Die Schlauchwand 11 schützt das verformbare, flexible Kontaktelement vor äußeren Einflüssen wie z. B. korrosiven Einflüssen, die von einer im Behälter enthaltenen Flüssigkeit ausgehen können; ferner vermeidet die verformbare Außenwand 11 einen direkten Kontakt des Erfassungselementes 4 mit den als Leiterbahnen fungierenden Schichten an der Wand 3 des verformbaren Kontaktelementes 1.

Der Darstellung gemäß Figur 2 ist entnehmbar, dass an der Außenwand 11 des verformbaren Kontaktelementes eine erste resisitve Schicht 12 angeordnet ist. An der ersten resistiven Schicht 12 des verformbaren Kontaktelementes, dem Hohlraum 2 des verformbaren Kontaktelementes 1 zuweisend, ist eine Schicht aus einem ferromagnetischen Material 14 angeordnet, dessen Außenseite 19 dem Hohlraum 2 des verformbaren Kontaktelementes 1 zuweist. Der Schicht 14 aus ferromagnetischem Material gegenüberliegend befindet sich eine zweite resistive Schicht 13, deren Oberseite 18 der Schicht 14 aus ferromagnetischem Material zuweist. Sowohl die erste resistive Schicht 12 als auch die zweite resistive Schicht 13 sind von der verformbaren Außenwandung 11 des flexiblen Kontaktelementes 1 umschlossen. Dem Bereich der Außenwandung 11, welche die zweite resistive Schicht 13 überdeckt, ist das Erfassungselement 4 an der Position 17 zugeordnet. Das Erfassungselement 4, welches entweder als ein Magnet oder als ein Permanentmagnet ausgestaltet sein kann, bewegt sich relativ zum verformbaren Kontaktelement 1 gemäß des mit Bezugszeichen 10 identifizierten Doppelpfeiles.

Zwischen der Außenseite 19 der Schicht 14 aus ferromagnetischem Material und der Oberseite 18 der zweiten resistiven Schicht 13 stellt sich außerhalb der Position 17 des Erfassungselementes 4 ein Wandabstand 15 ein. Im Bereich der Position 17 des Erfassungselementes 4 jedoch erfolgt aufgrund der erzeugten magnetischen Kraft eine Kontaktierung zwischen der Außenseite 19 der Schicht 14 aus ferromagnetischem Material und der Oberseite 18 der zweiten resistiven Schicht 13. An der Kontaktstelle 16 erfolgt mithin ein Kurzschluss der zweiten resistiven Schicht 13 mit der Schicht 14 aus ferromagnetischem Material, wodurch ein elektrisches Signal erzeugt wird, welches durch das erste Kabelende 8 bzw. das zweite Kabelende 9 (vergleiche Darstellung gemäß Figur 1) an eine hier nicht näher dargestellte Auswerteeinheit weitergeleitet werden kann. Das elektrische Signal, welches durch den Kontakt der Schicht 14 aus ferromagnetischem Material mit der zweiten resistiven Schicht 13 an der jeweiligen Position 17 des Erfassungselementes 4 erzeugt wird, entspricht der Position - über die Länge des verformbaren Kontaktelementes 1 gesehen - in welche das Erfassungselement 4 durch eine Kinematik bzw. direkt durch den Flüssigkeitspegel innerhalb des Behälters gestellt ist.

Die Füllstandshöhe der Flüssigkeit, deren Füllstand innerhalb eines in Figur 2 nicht dargestellten Behälters zu detektieren ist, hängt von der jeweiligen Position 4 des Erfassungselementes an der Außenseite des verformbaren Kontaktelementes 1 ab. Je nach Füllstandshöhe im in Figur 2 nicht dargestellten Behälter bewegt sich das Erfassungselement 4 entlang des Doppelpfeiles 10 entsprechend der Füllstandshöhe der Flüssigkeit innerhalb des Behälters. Abhängig von dem jeweiligen Flüssigkeitsspiegel stellt sich eine dem Flüssigkeitsspiegel folgende und mit diesem variable Kontaktstelle 16 entlang des verformbaren Kontaktelementes 1 ein. Abhängig von der Kontaktstelle 16 wird ein elektrisches Ausgangssignal erhalten, welches über das erste Kabelende 8 bzw. das zweite Kabelende 9 einer in Figur 2 nicht dargestellten Auswerteeinheit zuführbar ist.

Das Erfassungselement 4 wirkt in der Darstellung gemäß Figur 2 einem Schleifer vergleichbar, während die zu diesem korrespondierende Schleiferbahn durch das verformbare Kontaktelement 1 gebildet wird. Zwischen dem Erfassungselement 4 und den innerhalb des verformbaren Kontaktelementes 1 durch dessen Außenwandung 11 nach außen gekapselten Schichten 12, 13 bzw. 14 besteht kein elektrischer Kontakt; dieser erfolgt nur aufgrund der durch das Erfassungselement 4 ausgeübten magnetischen Kräfte und erzeugt über die Länge des verformbaren Kontaktelementes 1 gesehen ein elektrisch verarbeitbares Ausgangssignal an den Kabelenden 8 bzw. 9. Die erste resistive Schicht 12 und die zweite resistive Schicht 13 sind innerhalb der Außenwandung 11 des verformbaren Kontaktelementes 1 parallel geführt und im ersten Endbereich 6 des verformbaren Kontaktelementes 1 (vergleiche Darstellung gemäß Figur 1) zusammengeführt. An der Kontaktstelle 16 zwischen der Außenseite 19 der Schicht 14 aus ferromagnetischem Material und der Oberseite 18 der zweiten resistiven Schicht 13 ist jeweils nur der Widerstand der kurzgeschlossenen Schleifer wirksam; dementsprechend ist der Gesamtwiderstand der Leiterbahnschleifen reduziert. Der jeweils der Kontaktstelle 16 entsprechende Widerstand erlaubt eine Bestimmung des Flüssigkeitsstandes innerhalb eines Behälters.

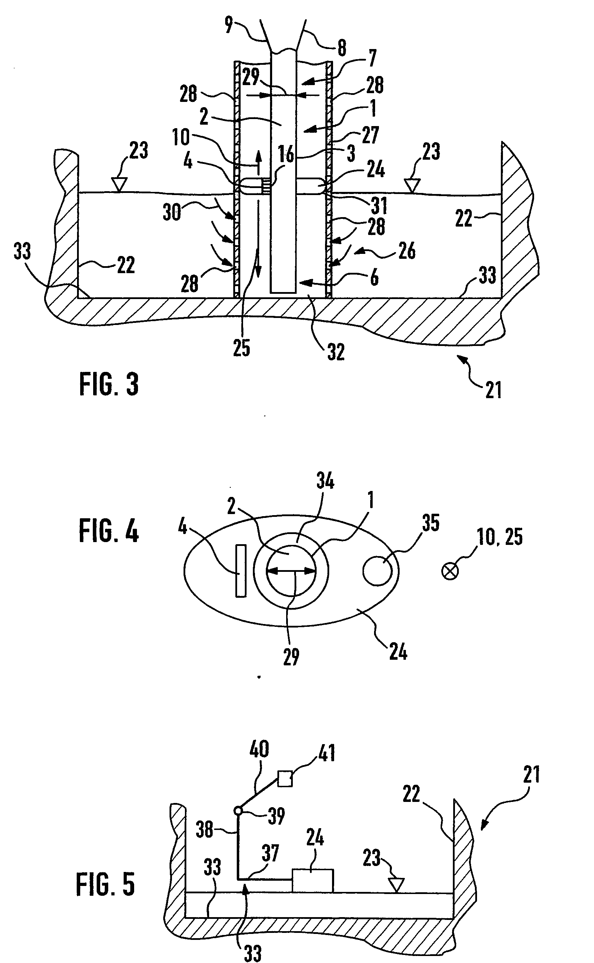

Der Darstellung gemäß Figur 3 ist eine Ausführungsvariante entnehmbar, bei der ein flexibles Kontaktelement in einer vertikalen Einbaulage innerhalb eines Kraftfahrzeugtankes dargestellt ist.

Ein Behälter 21 - hier in schematischer Wiedergabe ein Kraftstofftank eines Kraftfahrzeuges - umfasst eine Behälterwandung 22 sowie einen mit Bezugszeichen 33 bezeichneten Behälterboden. Innerhalb des Behälters 21 ist eine Flüssigkeit - im vorliegenden Beispiel etwa Kraftstoff - aufgenommen, deren Flüssigkeitspegel mit Bezugszeichen 23 bezeichnet ist. In vertikaler Einbaulage ist im Behälter 21 ein verformbares Kontaktelement 1 aufgenommen. Das verformbare Kontaktelement 1 befindet sich mit seinem ersten Endbereich 6 oberhalb des Behälterbodens 33, während im zweiten Endbereich 7 des verformbaren Kontaktelementes 1 das erste Kabelende 8 sowie das zweite Kabelende 9 als aus dem verformbaren Kontaktelement herausgeführt dargestellt sind. Das erste Kabelende 8 bzw. das zweite Kabelende 9 werden mit einer Auswerteschaltung verbunden, in welcher das durch die Kabelenden 8 bzw. 9 übertragene elektrische Signal ausgewertet wird.

In der Darstellung gemäß Figur 3 ist das verformbare, beispielsweise schlauchartig konfigurierte Kontaktelement 1 von einem röhrenförmigen Körper 26 umschlossen. Der röhrenförmige Körper 26 kann z. B. koaxial zum verformbaren Kontaktelement 1 am Behälterboden 33 des Behälters 21 angeordnet werden. Der röhrenförmige Körper 26 umfasst eine Mantelfläche 27, die ihrerseits über die gesamte vertikale Erstreckung mit einzelnen Öffnungen 28 am Umfang versehen sein kann. Zwischen der Innenseite der Mantelfläche 27 des röhrenförmig konfigurierten Körpers 26 und der Außenseite 5 des verformbaren Kontaktelementes 1 ist ein ringförmig konfigurierter Raum gebildet, der von der Flüssigkeit, deren Füllstandshöhe 23 zu erfassen ist, ausgefüllt wird. Die Flüssigkeit innerhalb des Behälters 21 tritt über die Öffnungen 28 in der Mantelfläche 27 des röhrenförmigen Körpers 26 in den Hohlraum zwischen der Mantelfläche 27 und der Außenseite des verformbaren Kontaktelementes 1 ein. Die Einströmbewegung der Flüssigkeit vom Behälter 21 in das Innere des röhrenförmigen Körpers 26 ist durch die mit Bezugszeichen 30 versehenen Pfeile angedeutet. Im ringförmigen Raum zwischen der Innenseite der Mantelfläche 27 und der Außenseite des verformbaren Kontaktelementes 1 stellt sich demnach eine zum Flüssigkeitsstand 23 im Behälter 21 identisches Flüssigkeitsniveau ein.

Am in vertikaler Einbaulage dargestellten verformbaren Kontaktelement 1 ist ein Schwimmerelement 24 aufgenommen. Das Schwimmerelement 24 bewegt sich relativ zum verformbaren Kontaktelement 1 und relativ zur Mantelfläche 27 des röhrenförmigen Körpers 26 in vertikale Richtung entsprechend des sich im Ringraum zwischen der Mantelfläche 27 und der Außenseite des verformbaren Kontaktelementes 1 einstellenden Flüssigkeitspegel. In das Schwimmerelement 24 kann das Erfassungselement 4 - in Gestalt eines Magneten oder auch eines Permanentmagneten - integriert sein, derart, dass dieses der Außenwand 11 des verformbaren Kontaktelementes 1 unmittelbar gegenüberliegt. Um ein Schrägstellen bzw. ein Verkanten und damit eine Verfälschung des tatsächlich vorliegenden Flüssigkeitspegels 23 zu vermeiden, ist am Schwimmerelement 24 eine Außenrundung 31 ausgebildet. Entsprechend des sich im Ringraum zwischen flexiblem Kontaktelement 1 und Innenseite der Mantelfläche 27 einstellenden Flüssigkeitsniveaus bewegt sich der Schwimmerkörper 24 entweder in Bewegungsrichtung 10 oder beim Flüssigkeitspegel 23 innerhalb des Behälters 21 in die Bewegungsrichtung, welche durch den abwärts gerichteten Pfeil 25 markiert ist. Demzufolge verschiebt sich das Schwimmerelement 24 mit integriertem Erfassungselement 4 entsprechend des Flüssigkeitspegels innerhalb des Ringraumes zwischen verformbarem Kontaktelement 1 bzw. Innenseite der Mantelfläche 27 des röhrenförmigen Körpers 26. Die in Figur 2 in vergrößerter Wiedergabe dargestellte Kontaktstelle 16 im in Figur 3 nicht dargestellten Hohlraum 2 des verformbaren Kontaktelementes 1 stellt sich demnach bei der in Figur 3 dargestellten Ausführungsvariante abhängig von der Position des Erfassungselementes 4 und damit abhängig von der Position des Schwimmerelementes 24 ein. Im Bereich der Position 17 des Erfassungselementes 4 stellt sich eine in Figur 2 mit Bezugszeichen 20 bezeichnete Verformung der Außenwandung 11 des verformbaren Kontaktelementes 1 ein, wodurch sich in dessen Hohlraum 2 eine Kontaktstelle 16 zwischen der Schicht aus ferromagnetischem Material und der zweiten resistiven Schicht 13 einstellt. Die Kontaktstelle 16 bewirkt die Ausbildung einer kurzgeschlossenen Schleife, deren Widerstandswert durch die in Figur 3 mit Bezugszeichen 8 bzw. 9 bezeichneten Kabelenden als elektrisches Ausgangssignal an eine Auswerteeinheit übermittelbar ist. Entsprechend der Position des Erfassungselementes 4 in Bezug auf die Länge des verformbaren Kontaktelementes 1 kann aufgrund des sich durch die Ausbildung der Kontaktstelle 16 einstellenden elektrischen Signales auf den Flüssigkeitspegel 23 innerhalb des Behälters 1 zurückgeschlossen werden. Der Durchmesser 29 des verformbaren Kontaktelementes 1 ist so bemessen, dass einerseits ein ausreichender Abstand 15 zwischen der Außenseite 19 der Schicht 14 aus ferromagnetischem Material und der zweiten resistiven Schicht 13 in den Bereichen vorliegt, in welchen das Erfassungselement 4 in Bezug auf die Außenseite des verformbaren Kontaktelementes 1 gerade nicht angeordnet ist. Andererseits ist der Durchmesser 29 des verformbaren Kontaktelementes 1 so bemessen, dass ein in Kontaktbringen der Außenseite 19 der Schicht 14 aus ferromagnetischem Material mit der Oberseite 18 der zweiten resistiven Schicht 13 an der Stelle gewährleistet ist, die das Erfassungselement 4 aufgrund des zu erfassenden Flüssigkeitspegels in Bezug auf das verformbare Kontaktelement 1 gerade annimmt.

Anstelle der Aufnahme des Erfassungselementes 4 innerhalb eines Schwimmerelementes 24, kann das Erfassungselement 4 auch an einem an der Behälterwand 22 des Behälters 21 gelenkig gelagerten Hebel aufgenommen sein. Der Hebel seinerseits kann mit einem Schwimmerelement verbunden sein, so dass dieser auf einen steigenden oder fallenden Flüssigkeitspegel innerhalb des Behälters 21 reagiert.

Anstelle von Anwendungen des eine direkte Berührung zwischen den Schleifern (Erfassungselement 4) und den Schleiferbahnen (resistive Schicht 13, ferromagnetische Schicht 14) zur Erfassung von Füllständen von Kraftfahrzeugtanks, lassen sich mit der erfindungsgemäß vorgeschlagenen Lösung auch die Füllstände von Scheibenwaschflüssigkeitsbehältern, Bremsflüssigkeitsbehältern, Hydraulikbehältern oder von Behältern in Laboren, die Schwebstoffe enthaltende Flüssigkeiten aufnehmen, erfassen. Ist die Erfassung von Füllstandshöhen von Öltanks, Wassertanks oder andere Flüssigkeiten aufnehmenden Behältern möglich. Je nach Ausbildung der Kinematik innerhalb des Behälters ließe sich auch ein Inkontaktbringen der zweiten resistiven Schicht 13 und einer Schicht 14 aus ferromagnetischem Material innerhalb des Hohlraumes 2 des verformbaren Kontaktelementes 1 durch eine von der Füllstandshöhe der im Behälter 21 aufgenommenen Flüssigkeit erreichen, indem ein stabförmiges Element an der Außenseite 11 des verformbaren Kontaktelementes 1 eine Druckbelastung auf dieses ausübt und dadurch eine Kontaktstelle 16 zwischen den Schichten 13, 14 an der Innenseite der Wand 3 des verformbaren Kontaktelementes 1 herbeiführt.

Figur 4 zeigt die Draufsicht auf ein Schwimmerelement, welches entlang des in Figur 3 dargestellten verformbaren Kontaktelementes 1 in vertikale Richtung auf- und abverfahrbar ist.

Das Schwimmerelement 24 gemäß der Darstellung in Figur 4 ist senkrecht zur Zeichenebene in die Bewegungsrichtungen 10 bzw. 25 entsprechend eines Flüssigkeitspegels 23 verfahrbar. Um eine Führung des Schwimmerelementes 24 in vertikale Richtung und ein Verdrehen des Schwimmerelementes 24 relativ zur Achse des verformbaren Kontaktelementes 1 zu verhindern, kann das Schwimmerelement 24 eine Schwimmerführung 35 umfassen, an der das Schwimmerelement 24 auf- und abverfahrbar ist. Um die reibungslose Vertikalbewegung in die Richtungen 10 bzw. 25 zu gewährleisten, kann darüber hinaus zwischen Schwimmerelement 24 und der Außenseite 5 des verformbaren Kontaktelementes 1 ein ringförmig ausgebildeter Luftspalt 34 vorgesehen sein, der eine Festkörperreibung zwischen der Innenseite des Schwimmerelementes 24 und der Außenseite 5 des verformbaren Kontaktelementes 1 unterbindet. Damit ist eine Leichtgängigkeit des Schwimmermoduls entsprechend des sich einstellenden Flüssigkeitspegels 23 innerhalb eines Behälters 21, wie z. B. eines Kraftfahrzeugtanks gewährleistet. Analog zur Darstellung des verformbaren Kontaktelementes 1 in Figur 3 ist der Innendurchmesser des verformbaren Kontaktelementes 1 mit Bezugszeichen 29 identifiziert.

Der Darstellung gemäß Figur 5 ist darüber hinaus eine Ausführungsvariante des verformbaren Kontaktelementes zu entnehmen, welches in horizontaler Einbaulage innerhalb eines Behälters 21 eingebaut werden kann. Gemäß dieser Lösung wird die Bewegung des Schwimmers 24 durch einen hier als rechtwinkligen Hebel 36 ausgebildeten Übertragungshebel über einen Drehpunkt 39 in eine Radialbewegung umgelenkt, so dass das Ende eines Druckstabes 40 sich radial entlang des als Kontaktschlauch ausgebildeten verformbaren Kontaktelementes bewegt. Am Stabende des Druckstabes 40 kann ein Erfassungselement 4, beispielsweise in Form eines Magnetkopfes, angeordnet werden, welches sich in radialer Richtung entlang des verformbaren Kontaktelementes 1 bewegt. Die Wegstrecke dieser Bewegung wird durch die Länge des Druckstabes 40 bis zum Drehpunkt 39 definiert. Statt einer radialen Schlauchführung, welche ähnlich zur Führung einer Potentiometerbahn ist, kann ebenso gut eine horizontale Schlauchführung, d. h. eine horizontal verlaufende Führung eines verformbaren Kontaktelementes 1, verwirklicht werden. Es stellt sich bei dieser Ausführungsvariante lediglich ein Unterschied im Verhältnis der Wegstrecken ein, welches jedoch durch die geometrischen Abmessungen bekannt ist und bei einer auf solche Weise verwirklichten, berührungslosen Füllstandsmessung Berücksichtigung finden kann. In diese Ausführungsvariante (vergleiche Darstellung gemäß Figur 5) kann als Erfassungselement 4 am Druckstab 41 ein Magnetkopf eingesetzt werden.

### Bezugszeichenliste

- 1: verformbares Kontaktelement
- 2: Hohlraum
- 3: Wand
- 4: Erfassungselement
- 5: Außenseite
- 6: erster Endbereich
- 7: zweiter Endbereich
- 8: erstes Kabelende
- 9: zweites Kabelende
- 10: Bewegungsrichtung Erfassungselement
- 11: Außenwand
- 12: erste resistive Schicht
- 13: zweite resistive Schicht
- 14: ferromagnetische Schicht
- 15: Abstand a
- 16: elektrische Kontaktstelle
- 17: Positionserfassungselement
- 18: Oberseite zweite resistive Schicht 13
- 19: Außenseite ferromagnetische Schicht 14
- 20: Verformung
- 21: Behälter
- 22: Behälterwand
- 23: Flüssigkeitspegel
- 24: Schwimmerelement
- 25: Bewegungsrichtung
- 26: röhrenförmiger Körper
- 27: Mantel
- 28: Öffnungen
- 29: Durchmesser flexibles Kontaktelement
- 30: nachströmende Flüssigkeit
- 31: Außenrundung
- 32: Bodenbereich röhrenförmiger Körper
- 33: Behälterboden
- 34: Luftspalt
- 35: Schwimmerführung
- 36: rechtwinkliger Hebel
- 37: erster Schenkel
- 38: zweiter Schenkel
- 39: Drehpunkt
- 40: Druckstab
- 41: Magnetkopf (Erfassungselement)

## Patentansprüche

1. Vorrichtung zur Erfassung des Füllstandes (23) einer Flüssigkeit innerhalb eines Behälters (21), in welchem ein elektrisches Kontaktelement (1) angeordnet ist, in dessen zweiten Endbereich (7) Anschlüsse (8, 9) vorgesehen sind, an denen ein elektrisches Signal abgreifbar ist, **dadurch gekennzeichnet, dass** innerhalb des Behälters (21) ein flexibles Kontaktelement (1) angeordnet ist, an dessen Innenseite (3) elektrisch leitende Schichten (12, 13, 14) angeordnet sind, die über ein an der Außenseite (5) angeordnetes, relativ zum Kontaktelement (1) bewegbares Erfassungselement (4, 41) miteinander kontaktierbar sind.

2. Vorrichtung nach Anspruch 1, **dadurch gekennzeichnet, dass** das flexible Kontaktelement (1) einen Hohlraum (2) aufweist, der von einer resistiven Schicht (13) und einer ferromagnetischen Schicht (14) begrenzt ist.

3. Vorrichtung nach Anspruch 2, **dadurch gekennzeichnet, dass** zwischen der ferromagnetischen Schicht (14) und der Außenwandung (11) des flexiblen Kontaktelementes (1) eine weitere resistive Schicht (12) angeordnet ist.

4. Vorrichtung nach Anspruch 1, **dadurch gekennzeichnet, dass** die Außenwandung (11) des flexiblen Kontaktelementes (1) verformbar ist.

5. Vorrichtung nach Anspruch 1, **dadurch gekennzeichnet, dass** an der jeweiligen Position (17) des Erfassungselementes (4) eine Leiterbahnkontaktierung (16) zwischen der Außenseite (19) des ferromagnetischen Materials (14) und der Oberseite (18) der zweiten resistiven Schicht (13) auftritt.

6. Vorrichtung nach Anspruch 1, **dadurch gekennzeichnet, dass** in den Behälter (21), dessen Füllstand (23) zu erfassen ist, ein röhrenförmiger Führungskörper (26) integriert ist.

7. Vorrichtung nach Anspruch 6, **dadurch gekennzeichnet, dass** der röhrenförmige Führungskörper (26) das flexible Kontaktelement (1) unter Ausbildung eines Ringraumes umschließt.

8. Vorrichtung gemäß Anspruch 6, **dadurch gekennzeichnet, dass** die Mantelfläche (27) des röhrenförmigen Körpers (26) mit ein Einströmen der Flüssigkeit in das Innere des röhrenförmigen Körpers (26) ermöglichenden Öffnungen (28) versehen ist.

9. Vorrichtung gemäß Anspruch 6, **dadurch gekennzeichnet, dass** das Erfassungselement (4) an einem Schwimmer (24) aufgenommen ist, welcher das flexible Kontaktelement (1) umschließt und welcher im röhrenförmigen Körper (26) in vertikale Richtung (10, 25) geführt ist.

10. Vorrichtung gemäß Anspruch 1, **dadurch gekennzeichnet, dass** ein als Magnetkopf (41) ausgebildetes Erfassungselement (4) an einem um einen Drehpunkt (39) bewegbaren stabförmigen Element (40) aufgenommen ist, welches mittels einer durch das Schwimmerelement (24) betätigten Hebelanordnung (36) zusammenwirkt.

11. Vorrichtung gemäß Anspruch 10, **dadurch gekennzeichnet, dass** das Hebelelement (36) als rechtwinkliger Hebel ausgebildet ist, der einen ersten Hebelschenkel (37) sowie einen zweiten Hebelschenkel (38) umfasst.

12. Vorrichtung gemäß Anspruch 11, **dadurch gekennzeichnet, dass** das Schwimmerelement (24) am ersten Hebelschenkel (34) bewegbar angelenkt aufgenommen ist.

13. Vorrichtung gemäß Anspruch 1, **dadurch gekennzeichnet, dass** das flexible Kontaktelement (1) in vertikaler Einbaulage im Behälter (21) aufgenommen ist.

14. Vorrichtung gemäß Anspruch 10, **dadurch gekennzeichnet, dass** ein am Ende des Druckstabes (40) aufgenommenes als Magnetkopf (41) ausgebildetes Erfassungselement in radialer Richtung über das als Kontaktschlauch ausgebildete verformbare Kontaktelement verfährt.
